# EUROPEAN PATENT SPECIFICATION

(11) **EP 3 176 418 B1**
(45) Date of publication and mention of the grant of the patent: **18.09.2019**
(21) Application number: 15830013.7
(22) Date of filing: 23.04.2015
(51) Int. Cl.: F02M 25/08, F02D 9/10, F02D 41/00, F02M 35/10, F02M 35/16

(54) **ENGINE UNIT AND SADDLE-TYPE VEHICLE**
MOTORAGGREGAT UND SATTELFAHRZEUG
UNITÉ DE MOTEUR ET VÉHICULE DE TYPE À SELLE

(30) Priority: 08.08.2014 JP 2014163073
(43) Date of publication of application: 07.06.2017
(73) Proprietor: Yamaha Hatsudoki Kabushiki Kaisha, Iwata-shi, Shizuoka 438-8501 (JP)
(72) Inventor: HARA, Takahiko, Iwata-shi Shizuoka 438-8501 (JP); WATANABE, Yuichiro, Iwata-shi Shizuoka 438-8501 (JP); OKUWA, Yoshinori, Iwata-shi Shizuoka 438-8501 (JP)
(74) Representative: Zimmermann, Tankred Klaus
(86) International application number: PCT/JP2015/062400
(87) International publication number: WO 2016/021246

(56) References cited:
- EP-A2- 1 369 568
- EP-A2- 2 434 136
- JP-A- S61 149 562
- JP-A- 2000 027 718
- JP-A- 2004 506 125
- JP-A- 2007 218 267
- JP-A- 2010 229 905
- US-A1- 2002 152 997

## Description

### Technical Field

The present invention relates to an engine unit and a straddled vehicle.

### Background Art

Some vehicles are provided with canisters. A canister accommodates therein an adsorbent which adsorbs fuel vapor generated in a fuel tank. There is a technique for actively introducing air containing fuel vapor from the canister into a combustion chamber, to reduce the amount of fuel vapor adsorbed by the adsorbent and then discharged from the canister to the atmosphere. This technique is widely used in engine units mounted on automobiles (four-wheeled vehicles). In JP 2007-218267 A, a solenoid valve is provided to a passage through which fuel vapor is introduced from the canister to an intake passage member. Opening and closing of this valve is controlled according to a duty ratio (or duty cycle), to control the amount of fuel vapor introduced into the combustion chamber. Under the duty ratio control, the solenoid valve is periodically switched on and off, and the period of an on-and-off cycle and/or the pulse width of control signals are adjusted. Due to this, the amount of fuel vapor introduced into the combustion chamber is controlled.

US 2002152997 A1 describes a method for controlling the emission of fuel vapor from a fuel tank venting system into an intake duct of an internal, combustion engine over an intake cycle during which an inlet valve of a cylinder is open. Summary of Invention Technical Problem

It has been desired to apply the technique described in JP 2007-218267 A to engine units used in straddled vehicles such as motorcycles. As a result of technical developments pursued by the present inventors, the following fact was found. If the technique of JP 2007-218267 A is applied as it is to an engine unit widely used in straddled vehicles, a disadvantage may be caused. That is, there is a possibility that the amount of fuel vapor introduced from the canister to the combustion chamber varies widely, which makes the control of the engine difficult.

An object of the present invention is to provide an engine unit and a straddled vehicle each of which enables easier control of an engine when fuel vapor is actively introduced from a canister to a combustion chamber.

### Solution to Problem

According to an embodiment of the present teaching, a single-cylinder or multi-cylinder four-stroke engine unit includes: a combustion chamber; an intake passage member through which air is introduced into the combustion chamber; and a throttle valve provided in an intermediate portion of the intake passage member. The combustion chamber, the intake passage member, and the throttle valve are provided for each cylinder. Pressure in a downstream intake passage portion of the intake passage member that is downstream of the throttle valve varies in a pressure-variation manner such that: a smaller depression having a smaller difference from atmospheric pressure and a larger depression having a larger difference from atmospheric pressure are created in each four-stroke cycle constituted by four strokes; and the creation of the smaller and larger depressions is performed in each four-stroke cycle. The engine unit further includes: a canister connected to a fuel tank and accommodating therein an adsorbent configured to adsorb fuel vapor contained in incoming air from the fuel tank; a communication passage member configured to establish communication between an inside of the canister and the downstream intake passage portion for each cylinder; a valve switchable from a closed state to an open state and switchable from the open state to the closed state, the closed state being the state where the valve prevents communication of air between the inside of the canister and the downstream intake passage portion, the open state being the state where the valve allows communication of air between the inside of the canister and the downstream intake passage portion; and a controller configured to control the valve to perform a valve switching operation in association with the pressure-variation manner in which the creation of the smaller and larger depressions is performed in each four-stroke cycle, the valve switching operation being a set of switching-on and switching-off operations, one of the operations being performed first and then the other one of the operations being performed, the switching-on operation being an operation to switch the valve from the closed state to the open state, and the switching-off operation being an operation to switch the valve from the open state to the closed state. The engine unit further includes an intake valve configured to open/close a communication opening between the downstream intake passage portion and the combustion chamber. The controller controls the valve (170) so as to perform the switching-on operation at a timing within a last half of a closed period during which the intake valve (141) is closed, and before the end of the closed period, performs the switching-off operation before the switching-on operation, during one four-stroke cycle in which the switching-on operation is performed, and performs each of the switching-on operation and the switching-off operation once in one four-stroke cycle in which the switching-on operation is performed.

The present inventors strived to find out the reason why the amount of fuel vapor introduced from the canister to the combustion chamber varies widely when the technique of JP 2007-218267 A is applied as it is to the engine unit widely used in straddled vehicles. The amount of fuel vapor introduced from the canister to the combustion chamber changes depending on the amount of the depression in the downstream intake passage portion, i.e., the difference between the negative pressure in the downstream intake passage portion and atmospheric pressure. The downstream intake passage portion is connected with the communication passage member extending from the canister. Taking the above into consideration, the present inventors compared depressions created in the downstream intake passage portion in the engine unit widely used in straddled vehicles with those in the engine unit widely used in automobiles. As a result of the comparison, the following difference was found.

The engine unit widely used in automobiles has an arrangement which suppresses pressure variation in the downstream intake passage portion. In JP 2007-218267 A, a surge tank is provided downstream of a throttle valve, and this suppresses the pressure variation. Furthermore, fuel vapor from the canister is introduced into the surge tank. Opening/closing operations of the valve to introduce fuel vapor is controlled by duty ratio in the above arrangement. Then, plotting the amount of introduced air as a function of the duty ratio shows a simple linear relationship as shown in FIG. 2 of JP 2007-218267 A.

Now, reference is made to the engine unit widely used in straddled vehicles. A multi-cylinder engine unit with individual throttle bodies and a single-cylinder engine unit are widely used in straddled vehicles. In such an engine unit for straddled vehicles, pressure in its downstream intake passage portion varies widely below atmospheric pressure, i.e., a large depression is created in its downstream intake passage portion. Such a large depression is created in each four-stroke cycle, and the creation of the depression is repeated on a four-stroke basis. Consider the case where fuel vapor is introduced from the canister into the downstream intake passage portion. In this case, the amount of air flowing from the communication passage member into the downstream intake passage portion depends on, not only the length of the period during which the valve is open, but also the amount of the depression in the downstream intake passage portion. The amount of the depression is, in other words, the difference between the pressure in the downstream intake passage portion and atmospheric pressure. Now, suppose that the length of the period during which the valve is open is fixed. When the pressure in the downstream intake passage portion varies on this premise, the amount of air introduced from the canister into the downstream intake passage portion varies depending on how the pressure varies during the period in which the valve is open. Accordingly, if the valve is periodically opened/closed as described in JP 2007-218267 A, i.e., opened/closed totally disregarding the four-stroke-basis pressure-variation manner in the engine unit widely used in straddled vehicles, the following disadvantage occurs. That is, the amount of air flowing from the canister into the downstream intake passage portion varies widely with the pressure variation.

In view of the above, in the present teaching, the amount of introduced fuel vapor is adjusted on the premise that the pressure variation exists, or rather, with the use of the pressure variation. Specifically, the following arrangement has been devised: the valve switching operation to introduce fuel vapor is performed in association with the pressure-variation manner in which the creation of the smaller and larger depressions in each four-stroke cycle is repeated on a four-stroke basis.

With this arrangement, the amount of introduced fuel vapor is properly adjusted in association with the pressure-variation manner when fuel vapor is actively introduced from the canister to the combustion chamber. As a consequence, the control of the engine is easier. Further, in this arrangement, the pressure in the downstream intake passage portion starts to drop when the intake valve is switched from the closed state to the open state. Then, the valve for introducing fuel vapor is opened in advance, before the completion of the closed period of the intake valve. This enables fuel vapor to flow from the canister into the intake passage promptly in response to the start of the pressure drop in the downstream intake passage portion.

In the present teaching, it is preferable that when each of the four strokes is counted as one stroke, the controller is configured to control the valve so as to perform the valve switching operation in association with an n-stroke period, where n is a multiple of 4.

The control to perform the valve-switching operations in association with the one-stroke period (i.e., on the basis of the one-stroke period) and the control to perform the valve-switching operations in association with the two-stroke period (i.e., on the basis of the two-stroke period) are both included in the control in association with the four-stroke cycle. When the valve-switching operations are performed in association with the n-stroke period (i.e., on the basis of the n-stroke period), where n is a multiple of 4, the operations are performed on the basis of the four-stroke cycle, or in association with a four-stroke cycle in the n-stroke period, with intervals of one or more four-stroke cycles. Thus, with the above-described arrangement, the purge amount is adjusted, in any of the above cases, in association with the pressure-variation manner in which the creation of the smaller and larger depressions in each four-stroke cycle is repeated on a four-stroke basis.

Further, in the present teaching, it is preferable that the controller is configured to control the valve so as to perform at least one of the switching-on and switching-off operations in synchronization with an n-stroke period, where n is a multiple of 4.

In this arrangement, at least one of the switching operations is performed in synchronization with the n-stroke period, where n is a multiple of 4. Thus, the control of the switching operations is easier.

In the present teaching, the controller may control the valve so as to perform each of the switching-on and switching-off operations once in each n-stroke period, where n is a multiple of 4. In the present teaching, the controller may control the valve so as to perform each of the switching-on and switching-off operations once in each four-stroke period. In the present teaching, the controller may control the valve so as to perform each of the switching-on and switching-off operations twice or more in each n-stroke period, where n is a multiple of 4. In the present teaching, the controller may control the valve so as to perform one of the switching-on and switching-off operations in each n-stroke period, where n is a multiple of 4, a timing to perform the one of the switching-on and switching-off operations in each period being different between the n-stroke periods.

Further, in the present teaching, it is preferable that: the engine unit further includes a sensor configured to detect negative pressure in the downstream intake passage portion; and the controller is configured to control a relative length of a valve open period in a four-stroke cycle with respect to a length of the four-stroke cycle, based on a detection result obtained by the sensor. The valve open period is the period during which the valve is in the open state.

In this arrangement, the pressure variation in the downstream intake passage portion is directly detected, and the length of the period during which the valve is in the open state is controlled based on the detection result. Thus, the purge amount is suitably adjustable in accordance with the pressure variation.

In the present teaching, it is preferable that the controller is configured to control the valve so that when a combustion chamber-introduction air amount, which is an amount of air introduced from the downstream intake passage portion into the combustion chamber, is equal to or lower than a predetermined value, a ratio of an amount of fuel vapor introduced from the communication passage member to the downstream intake passage portion to the combustion chamber-introduction air amount increases with an increase in the combustion chamber-introduction air amount.

In this arrangement, the valve is controlled so that the ratio of the amount of fuel vapor introduced into the downstream intake passage portion increases with the increase in the combustion chamber-introduction air amount before the combustion chamber-introduction air amount reaches the predetermined value. Thus, fuel vapor is introduced from the canister to the combustion chamber in such a manner that the influence of the fuel vapor on the combustion in the combustion chamber is small. Accordingly, the control of the engine is easier when fuel vapor is actively introduced from the canister to the combustion chamber.

According to an embodiment of the present teaching, a straddled vehicle includes: the engine unit of the above aspect of the present teaching; a vehicle body frame supporting the engine unit; a rider seat; handlebars provided frontward of the rider seat; and a fuel tank connected to the canister included in the engine unit.

With this arrangement, the amount of introduced fuel vapor is suitably adjustable in association with the pressure-variation manner observed in the engine unit widely used in straddled vehicles when fuel vapor is actively introduced from the canister into the combustion chamber. As a consequence, a straddled vehicle with an easily controllable engine is provided.

In the present teaching, "a smaller depression having a smaller difference from atmospheric pressure and a larger depression having a larger difference from atmospheric pressure" indicates that there are two depressions, one of which has a difference from atmospheric pressure larger than that of the other's. Furthermore, "in association with the pressure-variation manner" or "in association with an n-stroke period" means that the control is made with reference to the timing related to the pressure-variation manner or the n-stroke period. The timing for an operation within each four-stroke cycle or each n-stroke period, i.e., the location of the time point for an operation within the four-stroke cycle or the n-stroke period may be the same or different among the four-stroke cycles or the n-stroke periods. Note that "synchronized with/in synchronization with an n-stroke period" means that the timing for an operation within each n-stroke period, i.e., the location of the time point for an operation relative to the length of the n-stroke period, is the same among the n-stroke periods. For example, when time points in one-stroke period are expressed in crank angles of 0 to 180 degrees, "synchronized with/in synchronization with an n-stroke period" means that the operation is performed at the same crank angle in every n-stroke period.

### Brief Description of Drawings

FIG. 1 shows a side view of a motorcycle related to an embodiment of the present teaching.
FIG. 2 shows a schematic diagram illustrating an engine unit of the motorcycle in FIG. 1 and its peripherals. The diagram includes a partial cross section of an engine in the engine unit, and partially illustrates the internal structure of the engine.
FIG. 3A and FIG. 3B each shows a cross-section of a solenoid valve provided to a communication passage member coupling a canister to a downstream intake passage portion. Each cross-section partially includes a front view of its internal structure.
FIG. 4 shows a combination of: charts respectively showing the open/closed states of an intake valve, an exhaust valve, and the solenoid valve; and a graph showing the variation in pressure in the downstream intake passage portion.
FIG. 5A and FIG. 5B show graphs of conditions for controlling the solenoid valve.
FIG. 6 shows a graph of changes in the inflow amount of fuel vapor when the solenoid valve is controlled in accordance with various control methods.
FIG. 7 relates to a modification of the embodiment. Specifically, FIG. 7 is a combination of: charts showing the open/closed state of the solenoid valve; and a graph showing the variation in pressure in the downstream intake passage portion.
FIG. 8 relates to another modification of the embodiment. Specifically, FIG. 8 is a combination of: charts showing the open/closed state of the solenoid valve; and a graph showing the variation in pressure in the downstream intake passage portion.
FIG. 9 shows a schematic diagram for a still another modification in which the present teaching is applied to a multi-cylinder engine unit.

### Description of Embodiments

The following will describe an embodiment of the present teaching, with reference to a motorcycle 1 as an example. The motorcycle 1 is provided with an engine unit 100 which embodies an engine unit of the present teaching.

In the following description, a front-back direction refers to a vehicle's front-back direction as seen from a rider R seated on a rider seat 11 of the motorcycle 1. The rider seat 11 will be described later. A left-right direction refers to a vehicle's left-right direction (vehicle width direction) as seen from the rider R seated on the rider seat 11. Arrows F and B in the drawings respectively indicate a frontward direction and a backward direction. Arrows L and R in the drawings respectively indicate a leftward direction and a rightward direction.

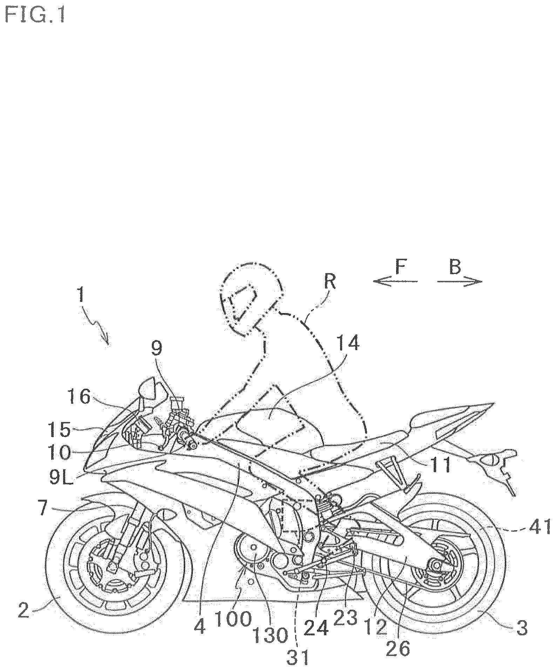

As shown in FIG. 1, the motorcycle 1 includes a front wheel 2, a rear wheel 3, a vehicle body frame 4, and the rider seat 11. A handle unit 9 is provided to a portion of the vehicle body frame 4 which is frontward of the rider seat 11. A grip 9R is provided at a right end portion of the handle unit 9, and a grip 9L is provided at a left end portion of the handle unit 9. It should be noted that only the grip 9L is illustrated in FIG. 1. The grip 9R is located on the other side from the grip 9L in the left-right direction. The grip 9R is a throttle grip. A brake lever is attached in the vicinity of the grip 9R. A clutch lever 10 is attached in the vicinity of the grip 9L. An upper end portion of a front fork 7 is secured to the handle unit 9. A lower end portion of the front fork 7 supports the front wheel 2.

A swingarm 12 is swingably supported, at its front end portion, by a lower portion of the vehicle body frame 4. A rear end portion of the swingarm 12 supports the rear wheel 3. A rear suspension connects a portion of the swingarm 12 which is not a swingarm pivot to the vehicle body frame 4. The rear suspension absorbs shock in the up-down direction.

The vehicle body frame 4 supports a single-cylinder engine unit 100. The vehicle body frame 4 may directly support the engine unit 100, or may indirectly support the engine unit 100 via another member. The engine unit 100 includes a four-stroke engine 130. The detailed structure of the engine unit 100 will be described later. An air cleaner 31 is connected to the engine 130. The air cleaner 31 is configured to clean incoming outside or external air. The air having been cleaned by the air cleaner 31 is introduced into the engine 130. A muffler 41 is connected to the engine 130. A fuel tank 14 is provided above the engine 130.

A transmission having a plurality of shift gears is provided rearward of the engine 130. The driving force of the engine 130 is transmitted to the rear wheel 3 via the transmission and a chain 26. A shift pedal 24 for changing the gears of the transmission is provided to the left of the transmission. Footrests 23 are provided to the right and left of the vehicle body frame 4. The footrests 23 are located slightly frontward of the rear wheel 3. The footrests 23 are configured to support the feet of the rider R riding the motorcycle.

A front cowling 15 is located above the front wheel 2 and in front of the grips 9R and 9L. A meter unit 16 is located between the front cowling 15 and the grips 9R and 9L in the front-back direction. The display surface of the meter unit 16 is configured to display thereon vehicle speed, engine speed, vehicle state, traveled distance, clock time, measured time, and the like.

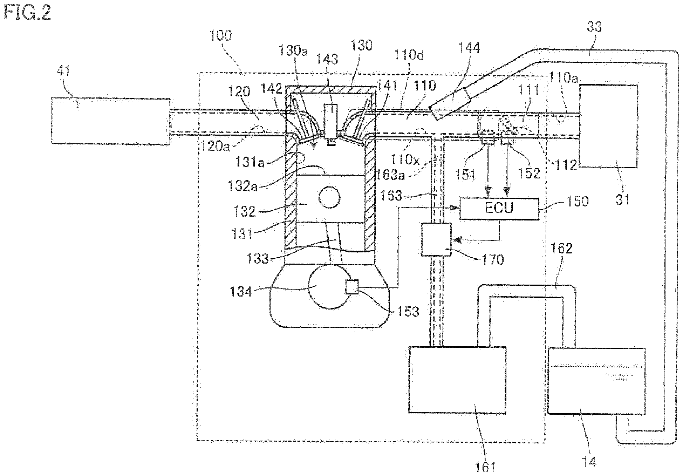

The following will describe the engine unit 100 in detail, with reference to FIG. 2. The engine unit 100 includes, in addition to the engine 130, an intake passage member 110 and an exhaust passage member 120. The intake passage member 110 and the exhaust passage member 120 are connected to the engine 130. The engine unit 100 further includes a canister 161, and an ECU (Electronic Control Unit) 150. The engine 130 is a four-stroke single-cylinder engine. In this engine 130, a crankshaft 134 (to be described later) rotates two revolutions in one engine cycle. One engine cycle is constituted by four strokes, which are the intake stroke, the compression stroke, the combustion stroke, and the exhaust stroke. The ECU 150 is configured by hardware such as a CPU (Central Processing Unit), a ROM (Read Only Memory), a RAM (Random Access Memory), and an ASIC (Application Specific Integrated Circuit), and by software such as program data stored in the ROM and/or the RAM. The CPU executes various types of information processing based on the software such as the program data. The ASIC controls components of the engine 130 based on the results of the above information processing. With this configuration, the ECU 150 controls the components of the engine 130 so that the above-mentioned four strokes are smoothly performed.

The engine 130 includes a cylinder 131, a piston 132, and the crankshaft 134. The piston 132 is provided in the cylinder 131. The crankshaft 134 is connected to the piston 132 via a connecting rod 133. A combustion chamber 130a is provided in the cylinder 131. The combustion chamber 130a is formed by an outer surface 132a of the piston 132 and an inner wall surface 131a of the cylinder 131. The combustion chamber 130a communicates with an intake passage 110a and an exhaust passage 120a. The intake passage 110a is in the intake passage member 110, and the exhaust passage 120a is in the exhaust passage member 120.

An intake valve 141 is provided at a communication opening between the intake passage 110a and the combustion chamber 130a. An exhaust valve 142 is provided at a communication opening between the exhaust passage 120a and the combustion chamber 130a. The engine 130 is provided with a valve operating mechanism configured to operate the intake valve 141 and the exhaust valve 142 in association with the movement of the crankshaft 134. The valve operating mechanism includes members such as a camshaft, rocker arms, rocker shafts, and the like. These members transmit power generated by the rotating crankshaft 134 to the intake valve 141 and the exhaust valve 142. This arrangement enables the intake valve 141 and the exhaust valve 142 to repeatedly open/close their respective communication openings between the intake and exhaust passages 110a and 120a and the combustion chamber 130a, at proper timings. The timings for opening/closing the valves are associated with the four strokes constituting one engine cycle. An ignition plug 143 is provided to ignite an air-fuel mixture in the combustion chamber 130a. The leading end of the ignition plug 143 is located in the combustion chamber 130a. The ignition plug 143 is electrically connected with the ECU 150. The ECU 150 controls the ignition by the ignition plug 143.

The intake passage 110a communicates with the combustion chamber 130a at one end of the intake passage member 110. The other end of the intake passage member 110 is connected to the air cleaner 31. Outside air is taken through the air cleaner 31. The air cleaner 31 cleans the air taken therethrough. Air having been cleaned by the air cleaner 31 is introduced into the intake passage member 110. Air, having been introduced from the air cleaner 31 into the intake passage member 110, passes through a throttle body 111 toward the engine 130. The throttle body 111 forms a part of the intake passage member 110. The throttle body 111 houses therein a throttle valve 112 so that its throttle opening angle is changeable. The throttle valve 112 is supported by the throttle body 111 so that the opening degree of a portion of the intake passage 110a that is located in the throttle body 111 changes depending on the throttle opening angle of the throttle valve 112. As the throttle opening angle of the throttle valve 112 changes, the flow rate of the air passing through the throttle body 111 changes. The throttle body 111 is provided with an electric motor configured to change the throttle opening angle of the throttle valve 112. The electric motor is electrically connected with the ECU 150. The ECU 150 controls how much the throttle valve 112 is rotated by the electric motor. Due to this, the ECU 150 controls the amount of air flowing from the air cleaner 31 into the engine 130 through the intake passage member 110. As described above, the throttle valve used in this embodiment is an electrically-driven throttle valve driven by an electric motor. Alternatively, a mechanical throttle valve may be used. The mechanical throttle valve is configured so that operation on the throttle grip is transmitted to the valve through a transmission mechanism.

A fuel injector 144 is provided to the intake passage member 110. The fuel injector 144 is configured to inject fuel into the intake passage 110a. The fuel injector 144 is connected to the fuel tank 14 via a fuel supply pipe 33. Fuel is supplied to the fuel injector 144 from the fuel tank 14 through the fuel supply pipe 33. The fuel injector 144 is electrically connected with the ECU 150. The ECU 150 controls fuel injection by the fuel injector 144 into the intake passage 110a.

The exhaust passage 120a communicates with the combustion chamber 130a at one end of the exhaust passage member 120. The other end of the exhaust passage member 120 is connected to the muffler 41. Exhaust gas from the engine 130 is discharged to the muffler 41 through the exhaust passage member 120. A three-way catalyst is provided in the exhaust passage 120a. The catalyst purifies the exhaust gas flowing from the engine 130 into the exhaust passage member 120. The exhaust gas purified by the catalyst is discharged to the outside through the muffler 41.

The engine unit 100 is provided with various sensors. For example, the throttle body 111 is provided with an intake pressure sensor 151. The intake pressure sensor 151 detects the pressure in a portion of the intake passage 110a that is downstream of the throttle valve 112. The throttle body 111 is further provided with a throttle position sensor 152 which detects the throttle opening angle of the throttle valve 112. The crankshaft 134 is provided with an rpm sensor 153 which detects the rpm (revolutions per minute) of the crankshaft 134. The rpm sensor 153 also detects the position of the crankshaft 134. Signals of the detection results obtained by the sensors are transmitted to the ECU 150. The ECU 150 controls the operation of the components of the engine unit 100 based on the detection results transmitted by the sensors.

The engine unit 100 further includes a canister 161. The canister 161 is provided to suppress the discharge of fuel vapor from the fuel tank 14 to the atmosphere by collecting fuel vapor in the fuel tank 14. The canister 161 accommodates therein an adsorbent such as activated charcoal. The canister 161 is connected with the fuel tank 14 via a vent pipe 162. Fuel vapor in the fuel tank 14 flows into the canister 161 through the vent pipe 162. The fuel vapor introduced in the canister 161 is adsorbed by the adsorbent in the canister 161.

The canister 161 is also coupled to the intake passage member 110 via a communication passage member 163. The inside of the canister 161 communicates with a communication passage 163a provided in the communication passage member 163 at one end of the communication passage member 163. The other end of the communication passage member 163 is connected to a downstream intake passage portion 110d of the intake passage member 110. The downstream intake passage portion 110d is the portion of the intake passage member 110 that is downstream of the throttle valve 112. As a consequence, the inside of the canister 161 communicates with a downstream intake passage 110x of the intake passage 110a via the communication passage 163a. The downstream intake passage 110x is the portion of the intake passage 110a that is located in the downstream intake passage portion 110d. In FIG. 2, the downstream intake passage 110x is shown as a part encircled by two-dot chain lines.

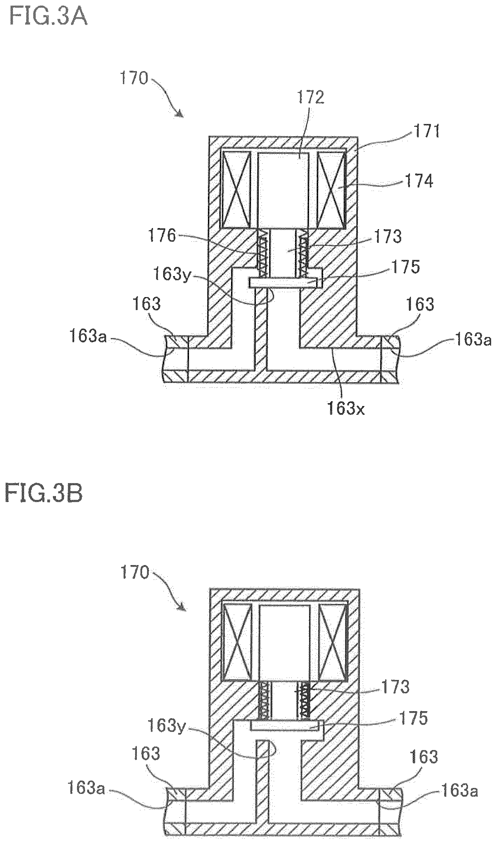

A solenoid valve 170 is provided to an intermediate portion of the communication passage member 163. As shown in FIG. 3A, the solenoid valve 170 includes: a case 171, a core 172, a plunger 173, a coil 174, a valve body 175, and a spring 176. The case 171 is fixed to the communication passage member 163. The core 172 is provided in the case 171. Furthermore, a communication passage 163x is provided in the case 171. The communication passage 163x is bent in an Ω (ohm) shape. The communication passage 163x is a part of the communication passage 163a. The communication passage 163x contains an opening 163y. The spring 176 biases the valve body 175 downward in FIG. 3A so that the valve body 175 keeps closing the opening 163y when no current flows through the coil 174. The valve body 175 is fixed to the leading end of the plunger 173. The state shown in FIG. 3A where the valve body 175 closes the opening 163y is hereinafter referred to as a closed state. In the closed state, fuel vapor cannot flow from the canister 161 to the downstream intake passage portion 110d through the communication passage 163a.

In response to the flow of electric current through the coil 174, the plunger 173 moves upward in this figure. The valve body 175 moves upward with the plunger 173, against the biasing force of the spring 176. As a result, the solenoid valve 170 is switched to the state shown in FIG. 3B. This state is hereinafter referred to as an "open state". When the solenoid valve 170 is in the open state, the valve body 175 opens the opening 163y. This allows fuel vapor to flow from the canister 161 to the downstream intake passage portion 110d through the communication passage 163a.

The solenoid valve 170 is switchable between the open state and the closed state under the control of the ECU 150. Hereinafter, an operation of switching the solenoid valve 170 from the closed state to the open state under the control of the ECU 150 is referred to as a "switching-on operation". Meanwhile, an operation of switching the solenoid valve 170 from the open state to the closed state under control of the ECU 150 is referred to as a "switching-off operation".

Switching the solenoid valve 170 into the open state establishes communication between the inside of the canister 161 and the downstream intake passage 110x. Meanwhile, pressure is transmitted from the combustion chamber 130a to the downstream intake passage 110x. For example, the pressure in the downstream intake passage 110x is mostly below atmospheric pressure in or during the intake stroke. If the solenoid valve 170 is in the open state in the intake stroke, the pressure below atmospheric pressure is transmitted from the downstream intake passage 110x to the canister 161 through the communication passage 163a. As a result, fuel vapor in the canister 161 flows into the downstream intake passage 110x through the communication passage 163a. The fuel vapor having flowed into the downstream intake passage 110x further flows into the combustion chamber 130a. The fuel vapor introduced into the combustion chamber 130a ignites in the combustion chamber 130a. Fuel vapor in the canister 161 is thus introduced into the combustion chamber 130a, and this reduces the discharge of the fuel vapor in the canister 161 to the atmosphere.

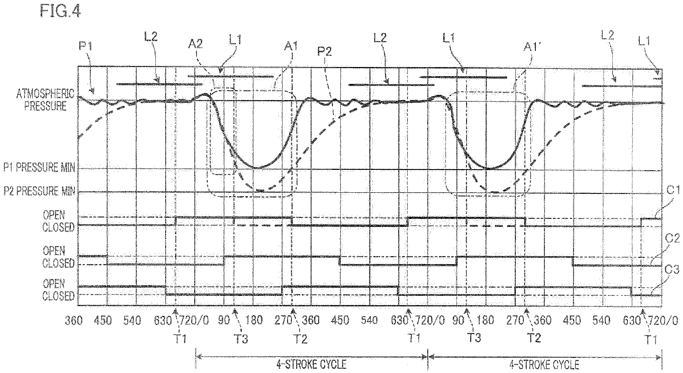

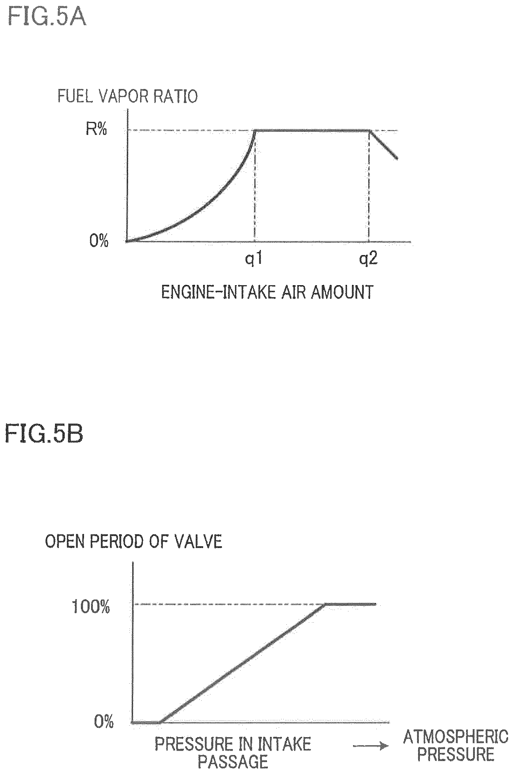

Now, in the field of automobiles (four-wheeled vehicles), the following technique is known: a solenoid valve configured to open/close a passage for introducing fuel vapor from a canister to an intake system is controlled by duty ratio. In this regard, the present inventors pursued technical developments, and found the fact as follows. If the above technique for automobiles is applied to an engine unit widely used in straddled vehicles, a disadvantage may be caused. That is, there is a possibility that the amount of fuel vapor introduced from the canister to the combustion chamber varies widely, which makes the control of the engine difficult. In view of the above, the present inventors wholeheartedly researched for a control method which eliminates or reduces the difficulty in the engine control when fuel vapor is actively introduced from the canister to the combustion chamber. As a result of the wholehearted research, the present inventors arrived at a control method which eliminates or reduces the above difficulty. Examples of the control method will be hereinafter described with reference to FIG. 4 and FIG. 5.

Each line segment L1 in FIG. 4 shows the period during which the intake valve 141 is open in a four-stroke cycle. Each line segment L2 shows the period during which the exhaust valve 142 is open in the four-stroke cycle. Curves P1 and P2 show pressure variation in the downstream intake passage 110x. Numerical values plotted on the abscissa in FIG. 4 represent crank angles in degrees. In this embodiment, the crank angle of 0 degree corresponds to the timing around the midpoint of the period from the timing for opening the intake valve 141 to the timing for closing the exhaust valve 142. The ordinate in FIG. 4 represents pressure values, for a graph showing the pressure variation in the downstream intake passage 110x.

The curve P1 shows the pressure variation in the condition where the crankshaft 134 rotates at a predetermined rpm. The curve P2 shows the pressure variation in the condition where: the throttle opening angle of the throttle valve 112 is the same as that for the curve P1; and the crankshaft 134 rotates at an rpm higher than that for the curve P1. As shown in the curves P1 and P2, the pressure in the downstream intake passage 110x starts to drop from atmospheric pressure a short time after the intake valve 141 starts to open. For the curve P1, the pressure reaches a bottom or a lowest value at around a crank angle of 180 degrees, and then turns to rise. After the intake valve 141 is closed, the pressure returns to the vicinity of the atmospheric pressure, at around a crank angle of 360 degrees. Then, the pressure slightly fluctuates around the atmospheric pressure and gradually becomes substantially constant. Meanwhile, for the curve P2, after the pressure reaches a bottom or a lowest value at around a crank angle of 200 degrees, the pressure returns to the atmospheric pressure more gently than in the pressure variation of the curve P1. In addition, the smallest pressure value in the curve P2 is smaller than that in the curve P1.

As such, a larger depression having a larger difference from atmospheric pressure and a smaller depression having a smaller difference from atmospheric pressure are created in order or sequence in each four-stroke cycle, in response to opening and closing of the intake valve 141. The larger depression appears around the range from 180 to 200 degrees, in the curves P1 and P2. The smaller depression appears in the range from 360 to 720 degrees in the curve P1, and in the range from 540 to 720 degrees in the curve P2. As the four-stroke cycle is repeated, the above pressure variation is repeatedly caused in the downstream intake passage 110x. Thus, the pressure varies in a pressure-variation manner such that the creation of the larger and smaller depressions is repeated on a four-stroke basis. This pressure-variation manner can be observed in the engine unit widely used in four-stroke straddled vehicles. The shift from the curve P1 to the curve P2 is caused by the increase in the rpm of the crankshaft, as described above. The curve P1 shifts in the same manner also when the throttle opening angle of the throttle valve 112 is decreased without changing the rpm of the crankshaft. That is to say, the smaller the throttle opening angle of the throttle valve 112 is, the greater the amount of pressure variation is.

The present inventors devised the following method for controlling the solenoid valve 170 by the ECU 150: switching operations of the solenoid valve 170 are controlled in association with the above-described pressure-variation manner observed in the engine unit widely used in four-stroke straddled vehicles. Note that "in association with the pressure-variation manner" means that the switching operations are controlled with reference to the timing at which a depression is created.

To be more specific, the present inventors used the control methods based on timing charts C1 to C3 in the lower portion of FIG. 4 of which timing chart C2 and C3 do not form part of the invention. The charts C1 to C3 correspond to the control methods different from one another. Any of the control methods based on the charts C1 to C3 may be used as the method for controlling the valve by the ECU 150. Alternatively, a combination of any two or more of the control methods based on the charts C1 to C3 may be used. In each of the charts C1 to C3, lines at the level labelled with "open" in FIG. 4 represent the periods during which the solenoid valve 170 is in the open state. Lines at the level labelled with "closed" in FIG. 4 represent the periods during which the solenoid valve 170 is in the close state.

In each of the control methods based on the charts C1 to C3, each of switching-on and switching-off operations is performed once in each four-stroke cycle. The switching-on operation is the operation to switch the solenoid valve 170 from the closed state to the open state. The switching-off operation is the operation to switch the solenoid valve 170 from the open state to the closed state. As a result of the above operations, fuel vapor flows from the communication passage 163a into the downstream intake passage 110x while the solenoid valve 170 is in the open state in each four-stroke cycle. The period during which the solenoid valve 170 is in the open state may be hereinafter referred to as an "open period of the solenoid valve 170". The length of the open period of the solenoid valve 170 is adjustable by changing at least one of the timings for the switching-on operation and for the switching-off operation.

In this embodiment, the timing for the switching-on operation is fixed in the four-stroke cycle. The length of the open period of the solenoid valve 170 is adjusted by changing the timing for the switching-off operation. Now, the timings for switching-on and switching-off operations in each four-stroke cycle are expressed in crank angles from 0 to 720 degrees. As shown in FIG. 4, the timing T1 for the switching-on operation in the chart C1 is at a crank angle of 660 degrees in each four-stroke cycle. The timing for the switching-on operation is the same among all the four-stroke cycles. The switching-on operation in the chart C1 is timed immediately before the timing for opening the intake valve 141 in each cycle. The timing for opening the intake valve 141 is indicated by the left end of each line segment L1 in FIG. 4. The timing for switching-on operation in the chart C2 is at a crank angle of 90 degrees in every four-stroke cycle. The switching-on operation in the chart C2 is timed in the course of pressure drop in the downstream intake passage 110x and before the pressure reaches the smallest value. The timing for the switching-on operation in the chart C3 is at a crank angle of 270 degrees in every four-stroke cycle. The switching-on operation in the chart C3 is timed after the pressure in the downstream intake passage 110x reaches the smallest value and in the course of the pressure rising to atmospheric pressure.

Each of the charts C1 to C3 in FIG. 4 shows the case where the length of the open period of the solenoid valve 170 is half of the length of the period corresponding to the four-stroke cycle. In other words, supposing the length of the period corresponding to the four-stroke cycle is 100%, the length of the open period of the solenoid valve 170 is 50% in each of the charts C1 to C3 in FIG. 4. Hereinafter, when the length of the open period of the solenoid valve 170 is expressed as a percentage, such an expression will be given on the premise that the length of the period corresponding to the four-stroke cycle is 100%.

The length of the open period of the solenoid valve 170 is adjusted by changing the timing for the switching-off operation. For example, in the chart C1, the timing for the switching-off operation can be changed from T2 (300 degrees) to T3 (120 degrees). Due to this, the length of the open period of the solenoid valve 170 is changed from 50% to 25%. In the chart C1, the switching-off operation is performed first and then the switching-on operation is performed in each four-stroke cycle. Contrary to this, in the charts C2 and C3, the switching-on operation is performed first and then the switching-off operation is performed in each four-stroke cycle. Thus, it does not matter in which order the switching-on and switching-off operations are performed in each four-stroke cycle.

The above-mentioned timings (crank angles) for the switching-on and switching-off operations are controlled based on the crank position of the crankshaft 134 detected by the rpm sensor 153.

Now, consideration is given to the amount of fuel vapor flowing from the communication passage 163a into the downstream intake passage 110x according to the control methods based on the charts C1 to C3. The amount of introduced fuel vapor depends on the relationship between the open period of the solenoid valve 170 and the pressure in the downstream intake passage 110x. For example, the period from T1 to T2 in the chart C1 is the open period of the solenoid valve 170. In this period, a larger depression having a relatively large difference from atmospheric pressure is created in both the curves P1 and P2, as shown in portions thereof enclosed with a two-dot chain line A1 in FIG. 4. During this period, fuel vapor flows from the communication passage 163a into the downstream intake passage 110x, the amount of which changes as the amount of the depression varies.

As described above, the timing for the switching-off operation is changeable in this embodiment. When the timing for the switching-off operation is changed, a change is caused in the relationship between the open period of the solenoid valve 170 and the pressure in the downstream intake passage 110x. For example, suppose that the timing for the switching-off operation is changed from T2 to T3 in the chart C1 (see a broken line shown in the chart C1.) With this change, the length of the open period of the solenoid valve 170 is changed from 50% to 25%. Then, the portions of each of the curves P1 and P2 indicating the larger depression created during the open period of the solenoid valve 170 are changed from the portions enclosed with the two-dot chain line A1 to the portions enclosed with a two-dot chain line A2. As a result, the amount of fuel vapor flowing from the communication passage 163a into the downstream intake passage 110x decreases.

Thus, in the control methods based on the charts C1 to C3, which are included in the control method of this embodiment, the ECU 150 is able to change the timing for the switching-off operation, while the timing for the switching-on operation is fixed. As such, in these control methods, the switching-on operation is performed in synchronization with the four-stroke cycle (four-stroke period). The expression "in synchronization with the four-stroke cycle" means that the timing for an operation in each four-stroke cycle is the same among the four-stroke cycles. By changing the timing for the switching-off operation in each four-stroke cycle, a change is caused in the relationship between the open period of the solenoid valve 170 and the pressure variation in each four-stroke cycle. Alternatively, an arrangement contrary to the above may be adopted: the timing for the switching-off operation may be synchronized with the four-stroke cycles, while the timing for the switching-on operation is changeable. The open period of the solenoid valve 170 may be changed by this arrangement.

The amount of fuel vapor flowing from the communication passage 163a into the downstream intake passage 110x is adjustable by changing the open period of the solenoid valve 170 in the above way. The control method of this embodiment makes it less likely that the amount of fuel vapor flowing from the communication passage 163a into the downstream intake passage 110x unexpectedly varies unless the manner of pressure variation in each four-stroke cycle widely changes.

For example, suppose that the open period of the solenoid valve 170 is fixed to 50% in the chart C1. In this case, the portions of the curve P1 indicating the larger depression created during the open period of the solenoid valve 170 are the portions enclosed with the two-dot chain lines A1 and A1' in FIG. 4. As can be seen from the comparison between the portions of the curve P1 encircled with the two-dot chain lines A1 and A1', there is no substantial difference in the manner of pressure variation between these portions. That is, unless the manner of the pressure variation widely changes, a change is less likely to be caused in the relationship between the open period of the solenoid valve 170 and the pressure variation, as long as the open period is fixed. Consequently, the amount of fuel vapor flowing from the communication passage 163a into the downstream intake passage 110x is less likely to change.

In the meantime, if the driving status of the motorcycle 1 changes, a change is caused also in the manner of the pressure variation in the downstream intake passage 110x. For example, if the rpm of the engine 130 changes, the manner of the pressure variation in the downstream intake passage 110x changes from the manner shown by the curve P1 to that shown by the curve P2. Therefore, even though the open period of the solenoid valve 170 is fixed, for example, under the control based on the chart C1, the change in the rpm causes a difference in the amount of fuel vapor flowing from the communication passage 163a into the downstream intake passage 110x. Specifically, there is a difference in the amount of fuel vapor between the case where the engine 130 runs at the rpm in the curve P1 and the case where the engine 130 runs at the rpm in the curve P2. Furthermore, the change in the rpm of the engine 130 also causes a change in the amount of air flowing into the combustion chamber 130a. Thus, the change in the rpm changes the amounts of inflow of fuel vapor and inflow of air. This changes the degree of influence of fuel vapor on the air-fuel ratio of the air-fuel mixture in the combustion chamber 130a. For this reason, introduction of fuel vapor into the combustion chamber 130a may hinder stable burning of the air-fuel mixture in the combustion chamber 130a at a desired air-fuel ratio.

Hence, for the purpose of stable burning of fuel in the combustion chamber 130a, the ECU 150 of this embodiment is configured to control the amount of fuel vapor introduced into the combustion chamber 130a as follows. The ECU 150 controls the length of the open period of the solenoid valve 170 based on the following detection values. The detection values are: the detection value for the rpm of the engine 130; and the detection value for the pressure in the downstream intake passage 110x or the detection value for the throttle opening angle of the throttle valve 112. These detection values are obtained from detection results obtained by the sensors 151 to 153. Which of the detection values (the detection value for the pressure in the downstream intake passage 110x and the detection value for the throttle opening angle of the throttle valve 112) is used is determined based on the driving status. For example, the detection value for the pressure in the downstream intake passage 110x may be used when the rpm of the engine 130 is low, and the detection value for the throttle opening angle of the throttle valve 112 may be used when the rpm of the engine 130 is high. Each detection value used for the control may be an average of values detected in a predetermined period of time. Alternatively, periodically detected values may be used for the control. The frequency of such detection may be once in each four-stroke cycle, or once in a plurality of four-stroke cycles.

The ECU 150 performs the control so that the ratio of the amount of inflow of fuel vapor per four-stroke cycle to the amount of air taken into the engine satisfies the relationship shown in FIG. 5A. Note that the amount of air taken into the engine may be referred to as an "engine-intake air amount". The engine-intake air amount is equivalent to a "combustion chamber-introduction air amount" in the present teaching. The abscissa of the graph in FIG. 5A represents the engine-intake air amount. The engine-intake air amount is the amount of air flowing into the combustion chamber 130a per four-stroke cycle. This amount is obtainable from: the rpm of the engine 130; and the throttle opening angle of the throttle valve 112 or the pressure in the downstream intake passage 110x. The ordinate of the graph in FIG. 5A represents the ratio of the amount of inflow of fuel vapor to the engine-intake air amount. Hereinafter, this ratio is referred to as a "fuel vapor ratio". The fuel vapor ratio is a percentage of the amount of fuel vapor flowing from the communication passage 163a into the downstream intake passage 110x per four-stroke cycle relative to the engine-intake air amount.

As shown in FIG. 5A, when the engine-intake air amount is smaller than a first value q1, the control is made so that the fuel vapor ratio simply increases with the increase in the engine-intake air amount. The larger the engine-intake air amount is, the smaller the influence of the fuel vapor introduced into the combustion chamber 130a on the combustion of the fuel is. Accordingly, by increasing the amount of fuel vapor introduced into the combustion chamber 130a with the increase in the engine-intake air amount, a large amount of fuel vapor is introduced into the combustion chamber 130a with a small influence on the combustion of the fuel. When the engine-intake air amount exceeds the first value q1, the control is made so that the fuel vapor ratio is kept constant at a predetermined value of R%. This is because, if the percentage of the amount of fuel vapor to the engine-intake air amount exceeds R%, control of the combustion in the engine 130 is difficult. When the engine-intake air amount further increases (e.g., when the engine-intake air amount exceeds a second value q2 larger than the first value q1), the fuel vapor ratio decreases with an increase in the engine-intake air amount. This is because, if the engine-intake air amount exceeds the second value q2, the fuel vapor ratio decreases with the increase in the engine-intake air amount even though the length of the open period of the solenoid valve 170 is set to 100%. The reason why the fuel vapor ratio decreases is as follows. The difference in the pressure in the downstream intake passage 110x from atmospheric pressure decreases when the engine-intake air amount increases at a constant rpm. The decreased difference in pressure makes it difficult for the fuel vapor to flow into the downstream intake passage 110x. This makes the increment in the amount of inflow of fuel vapor smaller than the increment in the engine-intake air amount.

In order to adjust the fuel vapor ratio to satisfy the relationship shown in FIG. 5A, the amount of introduced fuel vapor to the engine-intake air amount has to be controlled at a desired value. The amount of fuel vapor flowing from the communication passage 163a to the downstream intake passage 110x depends on the pressure in the downstream intake passage 110x. Then, the ECU 150 controls the solenoid valve 170 so that the length of the open period of the solenoid valve 170 is changed depending on the pressure in the downstream intake passage 110x, so as to satisfy the relationship shown in FIG. 5B. The pressure in the downstream intake passage 110x corresponds to a value detected by the intake pressure sensor 151, for example. As shown in FIG. 5B, the length of the open period of the solenoid valve 170 is adjusted so that the length increases as the pressure in the downstream intake passage 110x approaches the atmospheric pressure. A desired amount of inflow of fuel vapor is ensured by increasing the length of the open period of the solenoid valve 170 as the pressure in the downstream intake passage 110x approaches the atmospheric pressure.

The ECU 150 of this embodiment is configured to control the length of the open period of the solenoid valve 170 without calculating any of the engine-intake air amount and the fuel vapor ratio, as described below. The ECU 150 includes a storage unit. The storage unit stores therein: information for the length of the open period of the solenoid valve 170; and information for the rpm of the engine 130 and for the pressure in the downstream intake passage 110x. These pieces of information are associated with each other. The storage unit of the ECU 150 further stores therein: information for the length of the open period of the solenoid valve 170; and information for the rpm of the engine 130 and for the throttle opening angle of the throttle valve 112. These pieces of information are associated with each other. These pieces of information have been associated with each other in such a manner that the control by the ECU 150 satisfies the relationships shown in FIG. 5A and FIG. 5B when the ECU 150 controls the solenoid valve 170 based on the stored information and detection values. The ECU 150 obtains a piece of information for the length of the open period of the solenoid valve 170 from the storage unit. The piece of information is obtained based on: the detection value for the rpm of the engine 130; and the detection value for the pressure in the downstream intake passage 110x or the detection value for the throttle opening angle of the throttle valve 112. The ECU 150 controls the switching operations of the solenoid valve 170 so that the length of the open period of the solenoid valve 170 in each four-stroke cycle is equal to the length indicated by the piece of information obtained from the storage unit. In this embodiment, based on the charts C1 to C3, the timing for the switching-off operation is adjusted in each four-stroke cycle with the timing for the switching-on operation fixed, as described above.

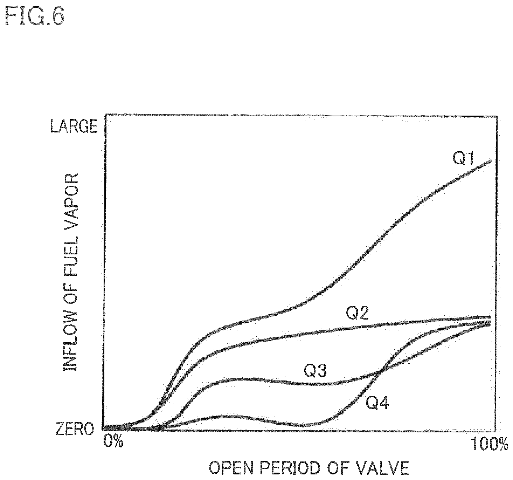

FIG. 6 is a graph showing changes in the amount of inflow of fuel vapor as a function of the length of the open period of the solenoid valve 170, under the control of the solenoid valve 170 based on the charts C1 to C3. A curve Q1 shows the change in the amount of inflow of fuel vapor under controls based on the charts C1 to C3 in the situation where the throttle opening angle of the throttle valve 112 is relatively small or the rpm of the engine 130 is relatively high. When the throttle opening angle of the throttle valve 112 is relatively small or the rpm of the engine is relatively high, the pressure in the downstream intake passage 110x is generally kept below atmospheric pressure over the period of four strokes, as shown by the curve P2 in FIG. 4, for example. Therefore, whichever of the charts C1 to C3 the control is based on, the amount of inflow of fuel vapor increases substantially linearly with an increase in the length of the open period of the solenoid valve 170, as shown by the curve Q1.

Meanwhile, when the throttle opening angle of the throttle valve 112 is relatively large or the rpm of the engine is relatively low, the manner of increase in the amount of inflow of fuel vapor differs depending on which of the charts C1 to C3 the control is based on. A curve Q2 shows the change in the amount of inflow of fuel vapor under control based on the chart C1 when the throttle opening angle of the throttle valve 112 is relatively large or the rpm of the engine is relatively low. The curve Q2 shows that the amount of inflow of fuel vapor substantially stably increases over the whole range from 0% to 100%. However, the increase of the curve Q2 is not as linear as that of the curve Q1. Furthermore, there is a smaller difference in the amount of inflow between the curves Q1 and Q2. Curves Q3 and Q4 respectively show the changes in the amount of inflow of fuel vapor under controls based on the chart C2 and C3 when the throttle opening angle of the throttle valve 112 is relatively large or the rpm of the engine is relatively low. As shown in these curves, under the control based on the chart C2 or C3, the amount of inflow of fuel vapor is smaller in most of the range from 0% to 100% than those in the cases shown by the curves Q1 and Q2. Furthermore, the manner of increase in the amount of inflow is less stable.

The reason why the change in the rpm causes differences among the curves showing the change in the amount of inflow of fuel vapor is as follows. As shown in the curves P1 and P2 in FIG. 4, for example, the manner of the pressure variation in the downstream intake passage 110x changes depending on the rpm. Particularly under the controls based on the charts C2 and C3, the switching-on operation is timed after the pressure in the downstream intake passage 110x starts to widely drop below atmospheric pressure. As shown in FIG. 4, the difference in the manner of pressure variation caused by the difference in the rpm mainly appears in the period after the timing at which the pressure in the downstream intake passage 110x reaches its smallest value. For this reason, under the controls based on the charts C2 and C3, a larger difference is caused in the amount of inflow of fuel vapor by the difference in the rpm. Meanwhile, the switching-on operation in the chart C1 is timed immediately before the intake valve 141 is open. That is, for both the curves P1 and P2, the switching-on operation in the chart C1 is timed immediately before the pressure in the downstream intake passage 110x starts to widely drop below atmospheric pressure. For this reason, under the control based on the chart C1, the smaller difference is caused in the amount of inflow of fuel vapor by the difference in the rpm.

As a consequence, the chart C1 is suitable for the control of the amount of inflow of fuel vapor. In the chart C1, the switching-on operation is timed immediately before the intake valve 141 opens. The control based on the chart C1 is effective also on the following point. After the intake valve 141 is switched from the closed state to the open state, the pressure in the downstream intake passage 110x starts to drop. In view of the above, the solenoid valve 170 is opened in advance, before the completion of the period during which the intake valve 141 is closed. This enables fuel vapor to flow from the canister 161 into the downstream intake passage 110x promptly in response to the start of the pressure drop in the downstream intake passage 110x. Note that there may be some time lag between the timing for the switching-on operation and the timing for opening the intake valve 141. For example, the timing for the switching-on operation may be before that in the chart C1, as long as the timing for the switching-on operation is within the last half of the period during which the intake valve 141 is closed.

The solenoid valve 170 may be controlled based on the engine-intake air amount calculated based on the detection values. The detection values are: the detection value for the rpm of the engine 130; and the detection value for the pressure in the downstream intake passage 110x or the detection value for the throttle opening angle of the throttle valve 112. For example, the ECU 150 may be configured as follows. The storage unit of the ECU 150 stores therein data indicating the graphs of FIG. 5A and FIG. 5B. The ECU 150 calculates the engine-intake air amount using the detection values. Then, the ECU 150 obtains the fuel vapor ratio corresponding to the thus calculated engine-intake air amount, with reference to the graph of FIG. 5A. Subsequently, the ECU 150 obtains the length of the open period of the solenoid valve 170 corresponding to the pressure in the downstream intake passage 110x derived from the detection values, with reference to the graph of FIG. 5B. Furthermore, the ECU 150 switches the solenoid valve 170 based on the thus obtained length of the open period of the solenoid valve 170.

It should be noted that the graphs of FIG. 5A and FIG. 5B are merely ideal examples referred to in the control by the ECU 150. It is preferable that the control is made so as to satisfy the relationships shown in these graphs as much as possible. Note that the control does not have to be made so that its result strictly satisfies the relationships shown in these graphs.

According to the present embodiment described above, the control of the engine 130 is easier when fuel vapor from the canister 161 is actively introduced into the combustion chamber 130a. The control is not easier when the duty ratio control used for the control of the induction of fuel vapor in automobiles is applied as it is in straddled vehicles. The following will describe the reason why the control is easier in this embodiment.

The present inventors compared depressions created in the intake passage in the engine unit widely used in straddled vehicles with those in the engine unit widely used in automobiles. As a result of the comparison, the present inventors found that there is the following difference between straddled vehicles and automobiles. The engine unit widely used in automobiles adopts the arrangement which suppresses pressure variation in the intake passage. Meanwhile, in the motorcycle 1, which is an example of straddled vehicles, a large depression is created in the downstream intake passage 110x in each four-stroke cycle, as shown by the curves P1 and P2 in FIG. 4. When fuel vapor from the canister 161 is introduced into the downstream intake passage 110x, the amount of air flowing from the communication passage 163a into the downstream intake passage 110x depends on, not only the length of the period during which the solenoid valve 170 is open, but also the pressure in the downstream intake passage 110x. Now, suppose that the length of the period during which the solenoid valve 170 is open is fixed. When the pressure in the downstream intake passage 110x varies on this premise, the amount of air introduced from the canister 161 into the downstream intake passage 110x varies depending on how the pressure varies during the open period of the solenoid valve 170. Accordingly, if the solenoid valve 170 is periodically opened/closed under the duty ratio control, which is used for introducing fuel vapor in automobiles, totally disregarding the four-stroke-basis pressure-variation manner, the following disadvantage occurs. That is, the amount of air flowing from the canister 161 into the downstream intake passage 110x varies widely with the pressure variation in the downstream intake passage 110x.

To deal with this, in the present embodiment, the amount of introduced fuel vapor is adjusted on the premise that the above-described pressure variation exists, or rather, with the use of the pressure variation. That is, the switching operations of the solenoid valve 170 are controlled to be performed in association with a pressure-variation manner such that: a smaller depression having a smaller difference from atmospheric pressure and a larger depression having a larger difference from atmospheric pressure are created in each four-stroke cycle; and the creation of the smaller and larger depressions is repeated on a four-stroke basis. Specifically, the timing for the switching-on operation of the solenoid valve 170 is controlled to be in synchronization with the four-stroke cycle. Furthermore, the timing for the switching-off operation of the solenoid valve 170 is adjusted to adjust the length of the open period of the solenoid valve 170 in each four-stroke cycle. As such, the solenoid valve 170 is controlled in association with the four-stroke-basis pressure-variation manner. This arrangement makes it easier to control the amount of fuel vapor introduced from the communication passage 163a into the downstream intake passage 110x in each four-stroke cycle at a desired level.

Thus, the amount of introduced fuel vapor is suitably adjustable in association with the pressure-variation manner when fuel vapor is actively introduced from the canister 161 into the combustion chamber 130a. This makes the control of the engine 130 easier.

It should be noted that the timing for the switching-on operation may be changed as follows. Specifically, instead of being synchronized with the four-stroke cycle, the timing for the switching-on operation may be shifted earlier as the rpm of the engine 130 increases. In other words, the crank angle at which the switching-on operation is performed may be decreased with the increase in the rpm. There is a short time lag between the timing at which fuel vapor actually starts to flow from the communication passage 163a into the downstream intake passage 110x and the timing for the switching-on operation. Meanwhile, when the rpm increases, the absolute length of the period for the four-stroke cycle decreases. Therefore, as the rpm increases, the time lag between the timing for the switching-on operation and the start of the inflow of the fuel vapor increases relative to the length of the period for the four-stroke cycle. To deal with this, the timing for the switching-on operation in each four-stroke cycle may be shifted earlier as the rpm increases. This makes the influence caused by the above time lag smaller.

As described above, the timings for the switching-on and switching-off operations are controlled based on the crank position (crank angle) of the crankshaft 134 detected by the rpm sensor 153. However, the switching-on and switching-off operations may be performed based on the detection result obtained by the intake pressure sensor 151 or the like. That is, these operations may be performed at their respective timings directly associated with the pressure variation caused in the downstream intake passage 110x in each four-stroke cycle and detected by the intake pressure sensor 151 or the like.

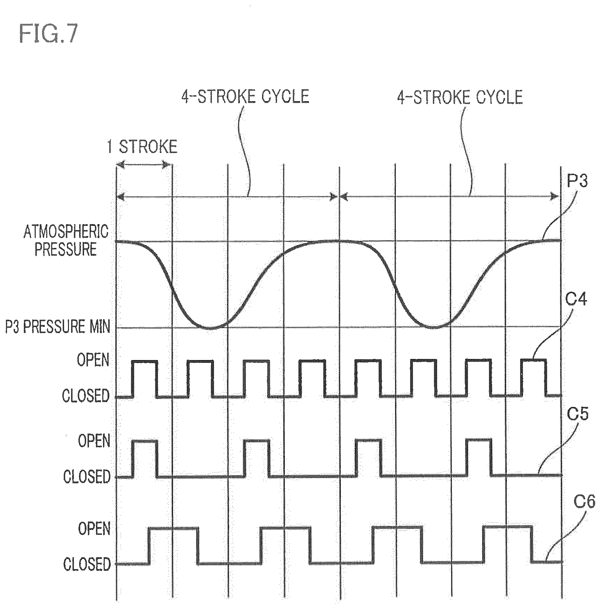

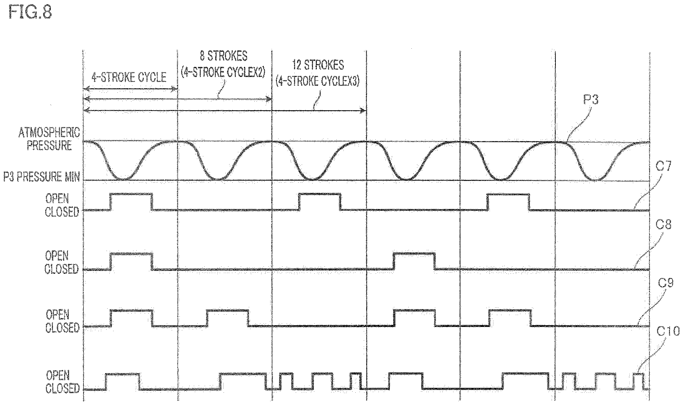

The following will describe control methods other than the control methods based on the charts C1 to C3, with reference to FIG. 7 and FIG. 8. In FIG. 7 and FIG. 8, a curve P3 shows how the pressure in the downstream intake passage 110x varies under the condition where the rpm of the engine 130 is constant. As well as the curves P1 and P2, the curve P3 also shows the pressure-variation manner such that the creation of the larger and smaller depressions is repeated on a four-stroke basis.

In the above-described control methods based on the charts C1 to C3, each of the switching-on and switching-off operations of the solenoid valve 170 is performed once in each four-stroke cycle. Meanwhile, in the control methods based on the charts C4 to C6 (which do not form part of the invention) in FIG. 7, each of the switching-on and switching-off operations is performed twice or more in each four-stroke cycle. The chart C4 shows the case where each of the switching-on and switching-off operations is performed once in each one-stroke period. The charts C5 and C6 each shows the case where each of the switching-on and switching-off operations is performed once in each two-stroke period. As shown in these charts, the solenoid valve 170 may be controlled in association with the one-stroke or two-stroke period. It should be noted that the control in association with the one-stroke or two-stroke period is encompassed by the control in association with the four-stroke cycle. That is, within the control in association with the four-stroke cycle, the control is further subdivided to the control in each one-stroke or two-stroke period. For this reason, the control methods based on the charts C4 to C6 are included in the control in association with the four-stroke-basis pressure-variation manner.

In the control based on the chart C4, the timing for the switching-on operation may be synchronized with the one-stroke period. In other words, the timing for the switching-on operation in each one-stroke period may be the same among the one-stroke periods. Furthermore, in the control based on the chart C5 or C6, the timing for the switching-on operation may be synchronized with the two-stroke period. In other words, the timing for the switching-on operation in each two-stroke period may be the same among the two-stroke periods. When the timing for the switching-on operation is synchronized with the one-stroke or two-stroke period as described above, the length of the open period of the solenoid valve 170 is changed by changing the timing for the switching-off operation. Alternatively, the length of the open period of the solenoid valve 170 may be changed by changing the timing for the switching-on operation while the timing for the switching-off operation is synchronized with the one-stroke or two-stroke period. In addition, the control in association with the two-stroke period may be made as shown in the chart C6. That is, the period from the switching-on operation to the switching-off operation may stride the boundary between two strokes.

A chart C7 shown in FIG. 8 shows the control in association with the period corresponding to two four-stroke cycles, instead of one four-stroke cycle. That is, the chart C7 shows the control in association with the eight-stroke period. Charts C8 and C9 each shows the control in association with the period corresponding to three four-stroke cycles, i.e., the twelve-stroke period. Thus, the control may be made in association with an n-stroke period, where n is a multiple of 4. Under such a control, fuel vapor is introduced into the downstream intake passage 110x in a four-stroke cycle of the n-stroke period, where n is a multiple of 4, but fuel vapor is not introduced in the remaining four-stroke cycle(s). In each of the four-stroke cycles in which fuel vapor is introduced, the solenoid valve 170 is controlled in association with the manner of pressure variation in each four-stroke cycle.

A chart C10, which does not form part of the invention, shows an example of controls in association with the four-stroke cycle but not in synchronization with the four-stroke cycle. As shown in the chart C10, none of the timings for the switching-on and off operations is synchronized with the four-stroke cycle. Thus, the expression "in association with" in the present teaching encompasses the case where the timing for an operation is synchronized with the four-stroke cycle and the case where the timing for an operation is not synchronized with the four-stroke cycle. For example, suppose that it is desired to keep the amount of fuel vapor introduced into the downstream intake passage 110x in each four-stroke cycle at a desired level. In this case, the open period of the solenoid valve 170 does not have to be the same among the four-stroke cycles. The open period may be different among the four-stroke cycles as shown in the chart C10, as long as the following condition is satisfied. That is, it is only required that the amount of fuel vapor introduced into the downstream intake passage 110x in each four-stroke cycle is kept at a desired value as a result of the control of the switching-on and switching-off operations of the solenoid valve 170 in association with the four-stroke-basis pressure-variation manner.

As described above, it has been desired to apply the technique used for automobiles to the engine unit used in straddled vehicles including the motorcycle 1. This is the background to the development of this embodiment. It was found that, if the technique for automobiles is applied as it is to the engine unit widely used in straddled vehicles, a disadvantage may be caused. That is, there is a possibility that the amount of fuel vapor introduced from the canister to the combustion chamber varies widely, which makes the control of the engine difficult. Specifically, in the engine unit for straddled vehicles, the creation of smaller and larger depressions is repeated on a four-stroke basis. In this engine unit, there is a possibility that the amount of fuel vapor introduced from the canister to the combustion chamber varies widely, which makes the control of the engine difficult. Then, the present embodiment has been developed for the purpose of eliminating or reducing the difficulty in the control of the engine when fuel vapor is actively introduced from the canister into the combustion chamber in the engine unit in which the creation of the smaller and larger depressions is repeated on a four-stroke basis.

A preferred embodiment of the present teaching has been described above. It should be noted that the present teaching is not limited to the above-described embodiment, and various changes can be made within the scope of the claims. Furthermore, the above-described embodiment and modifications described below may be used in combination as needed. It is noted that the term "preferable" used herein is non-exclusive and means "preferable but not limited to". It is noted that the term "may..." used herein is non-exclusive and means "may..., but not limited to".

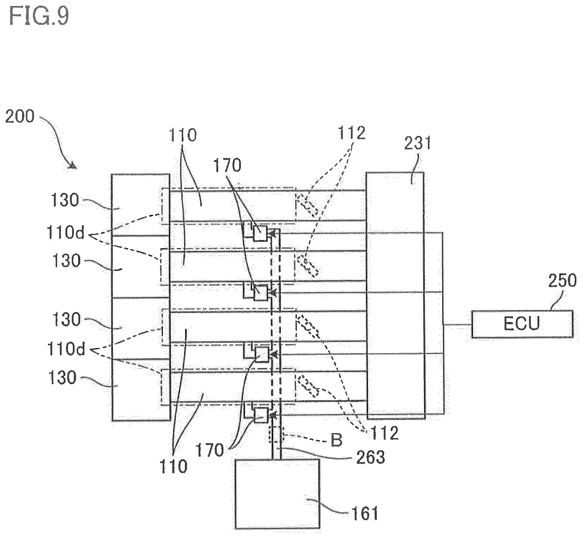

In the above-described embodiment, the present teaching is applied to the single-cylinder engine unit 100. Alternatively, the present teaching may be applied to a multi-cylinder engine unit 200 shown in FIG. 9. The engine unit 200 includes four engines 130, four intake passage members 110, a canister 161, an ECU 250, and a communication passage member 263. The four intake passage members 110 are respectively connected to the four engines 130. Fuel vapor is introduced from the canister 161 to the intake passage members 110 through the communication passage member 263. An air cleaner 231 is configured to clean air. Cleaned air is supplied to the four intake passage members 110. A throttle valve 112 is individually provided in each of the intake passage members 110. That is to say, the engine unit 200 is the engine unit with individual throttle bodies. Also in this engine unit with the individual throttle bodies, pressure in each downstream intake passage portion 110d that is downstream of the corresponding throttle valve 112 varies in the same manner as above. That is, pressure in each downstream intake passage portion 110d varies in the pressure-variation manner such that: a smaller depression having a smaller difference from atmospheric pressure and a larger depression having a larger difference from atmospheric pressure are created in each four-stroke cycle; and the creation of the smaller and larger depressions is repeated on a four-stroke basis. Because of the above structure, the communication passage member 263 has four branched portions respectively connected to the downstream intake passage portions 110d. A solenoid valve 170 is provided to each of the branched portions. The ECU 250 controls each of the four solenoid valves 170 in association with the pressure variation in the corresponding downstream intake passage portion 110d. The control method for each solenoid valve 170 is similar to that by the ECU 150. Due to this, when fuel vapor is actively introduced from the canister 161 into the combustion chamber 130a of each engine 130, the amount of introduced fuel vapor is suitably adjusted in association with the pressure-variation manner. In this modification, the engine unit 200 has four cylinders. It should be noted that the present teaching may be applied to a two-cylinder, three-cylinder, or five or more-cylinder engine unit.

A further modification of the modification of FIG. 9 is also possible. In this further modification, a single solenoid valve 170 is provided at a position indicated with a broken line B in FIG. 9, instead of the four solenoid valves 170. In this modification, the ECU 250 controls the switching-on and switching-off operations of the single solenoid valve 170 in association with the pressure-variation manner in each of the four downstream intake passage portions 110d. For example, suppose that the stroke phases of the four engines 130 are shifted from one another by a crank angle of 180 degrees each. In this case, the switching-on and switching-off operations of the solenoid valve 170 may be controlled as follows. The period corresponding to the four-stroke cycle in length is divided into four sections. Then, the solenoid valve 170 is controlled in each section, in association with the pressure-variation manner in the downstream intake passage portion 110d corresponding to that section.

The above-described embodiment describes the case where the solenoid valve 170 is controlled in association with one-stroke, two-stroke, four-stroke, eight-stroke, or twelve-stroke period. However, the solenoid valve 170 may be controlled in association with an n-stroke period, where n is a multiple of 4 and equal to or more than 16.

The above-described embodiment describes the case where each of the switching-on and switching-off operations of the solenoid valve 170 is performed once, twice, or four times in each four-stroke cycle. However, each of the switching-on and switching-off operations may be performed three times or five or more times in each four-stroke cycle.

Furthermore, in the above-described embodiment, the ECU 150 controls the solenoid valve 170 so as to satisfy the conditions shown in FIG. 5A and FIG. 5B. However, the ECU may control the solenoid valve 170 so as to satisfy conditions different from those shown in FIG. 5A and FIG. 5B.

Furthermore, in the above-described embodiment, the storage unit of the ECU 150 stores therein: information for the length of the open period of the solenoid valve 170; and information for the rpm of the engine 130 and for the pressure in the downstream intake passage 110x. These pieces of information are associated with each other. In addition, the storage unit of the ECU 150 stores therein: information for the length of the open period of the solenoid valve 170; and information for the rpm of the engine 130 and for the throttle opening angle of the throttle valve 112. These pieces of information are associated with each other. When obtaining the length of the open period of the solenoid valve 170 based on the information stored in the storage device, the detection value for the pressure in the downstream intake passage 110x or the detection value for the throttle opening angle of the throttle valve 112 is used. Which one of them is used is determined based on the driving status. In this regard, the detection value for the throttle opening angle of the throttle valve 112 may be always used irrespective of the driving status. In this case, the storage unit of the ECU 150 may store only the information for the length of the open period of the solenoid valve 170 and the information for the rpm of the engine 130 and for the throttle opening angle of the throttle valve 112, associated with the information for the length. That is, the storage unit does not have to store the information for the rpm of the engine 130 and for the downstream intake passage 110x, associated with the information for the length of the open period of the solenoid valve 170. Furthermore, in the above case, a detector configured to directly detect the pressure in the downstream intake passage 110x does not have to be provided. That is, the intake pressure sensor 151 may be omitted in the above case.

Note that, in this Specification, "control in association with the four-stroke-basis pressure-variation manner" means that control is made so that the valve is operated with a timing related to the pressure-variation manner in which the creation of the depressions is repeated on a four-stroke basis. This control may be made based on the time point of the present moment in the four-stroke cycle, by obtaining the time point. The above time point may be obtained in any way. For example, in the above-described embodiment, the crank position (crank angle) of the crankshaft 134 is detected by the rpm sensor 153. Based on the detection result, the switching-on and switching-off operations of the solenoid valve 170 are performed at respective specific crank angles. Furthermore, the "control in association with the four-stroke-basis pressure-variation manner" includes the control based on the detection result of the pressure variation repeated on a four-stroke basis. Examples of such control include the control directly associated with the pressure variation indicated by the detection results obtained by the intake pressure sensor 151 or the like. For example, the switching-on or switching-off operation may be performed when the value of the pressure detected by the intake pressure sensor 151 or the like is equal to a predetermined value.

There are a variety of manners of control in association with the four-stroke-basis pressure-variation manner. Examples of the control in association with the four-stroke-basis pressure-variation manner include: the control in association with the one-stroke period, the control in association with the two-stroke period, and the control in association with an n-stroke period, where n is a multiple of 4. Examples of the control in association with the one-stroke period include the control to perform the switching-on operation in each one-stroke period and the control to perform the switching-off operation in each one-stroke period, as shown in the chart C4. Examples of the control in association with the two-stroke period include the control to perform the switching-on operation in each two-stroke period and the control to perform the switching-off operation in each two-stroke period, as shown in the chart C5, C6 in FIG. 7. Examples of the control in association with the n-stroke period, where n is a multiple of 4, include the control to perform the switching-on operation in each four-stroke cycle and the control to perform the switching-off operation in each four-stroke cycle, as shown in the charts C1 to C3 in FIG. 4. Examples of the control in association with the n-stroke period, where n is a multiple of 4, further include the control to perform the switching-on operation and/or the switching-off operation in each eight-stroke or 12-stroke period, as shown in the charts C7 to C10 in FIG. 8. Examples of the control in association with the n-stroke period, where n is a multiple of 4, still further include the control to perform the switching-on and/or switching-off operations in each 16-stroke or 20-stroke period. The multiple of 4 may be equal to or more than 16.

Furthermore, in the "control in association with the four-stroke-basis pressure-variation manner", it does not matter whether the period from the switching-on operation to the switching-off operation strides the boundary between strokes or the boundary between four-stroke cycles. As shown in the chart C1 in FIG. 4 and the chart C6 in FIG. 7, for example, the period from the switching-on operation to the switching-off operation may stride the boundary between strokes or the boundary between four-stroke cycles. Alternatively, as shown in the charts C2 and C3 in FIG. 4 and the charts C4 and C5 in FIG. 7, the period from the switching-on operation to the switching-off operation may fall within the one-stroke period or the four-stroke cycle.

Moreover, in the "control in association with the four-stroke-basis pressure-variation manner", it does not matter whether the timing for the switching-on operation and/or the timing for the switching-off operation is/are synchronized with the period of one or more strokes, or the four-stroke cycle. For example, the control shown in the chart C10 is also included in the "control in association with the four-stroke-basis pressure-variation manner". In the control shown in the chart C10, the timings for the switching-on and switching-off operations are not synchronized with the four-stroke cycle. Note that "synchronized with/in synchronization with an n-stroke period" means that the timing for an operation within each n-stroke period, i.e., the location of the time point for an operation relative to the length of the n-stroke period, is the same among the n-stroke periods. Meanwhile, "synchronized with/in synchronization with the four-stroke cycle" means that the timing for an operation within each four-stroke cycle, i.e., the location of the time point for an operation relative to the length of the four-stroke cycle, is the same among the four-stroke cycles.

In addition to the above, "creation of the smaller and larger depressions is repeated on a four-stroke basis" herein indicates that two depressions are present in each four-stroke cycle, and one of the depressions has a difference from atmospheric pressure larger than that of the other's. In other words, there are two depressions in each four-stroke cycle, the differences of which from atmospheric pressure are different from each other.

It should be noted that the straddled vehicle in the present teaching is not limited to the above-described motorcycle 1. The straddled vehicle may be any vehicle which a rider straddles to ride the vehicle. The straddled vehicle may be any other type of two-wheeled motor vehicle, such as an off-road motorcycle, a scooter, and a moped. In addition to the above, the straddled vehicle in the present teaching encompasses a tricycle and a four-wheeler (all terrain vehicle (ATV)).

### Reference Signs List

1: motorcycle
14: fuel tank
100: engine unit
110: intake passage member
110a: intake passage
112: throttle valve
120: exhaust passage member
120a: exhaust passage
130: engine
130a: combustion chamber
141: intake valve
142: exhaust valve
151: intake pressure sensor
152: throttle position sensor
153: rpm sensor
161: canister
163: communication passage member
163a: communication passage
170: solenoid valve
200: engine unit
263: communication passage member

## Claims

1. A single-cylinder or multi-cylinder four-stroke engine unit (100, 200) comprising:
a combustion chamber (130a); an intake passage member (110) through which air is introduced into the combustion chamber (130a); and a throttle valve (112) provided in an intermediate portion of the intake passage member (110), the combustion chamber (130a), the intake passage member (110), and the throttle valve (112) being provided for each cylinder (131), pressure in a downstream intake passage portion (110d) of the intake passage member (110) that is downstream of the throttle valve (112) varying in a pressure-variation manner such that: a smaller depression having a smaller difference from atmospheric pressure and a larger depression having a larger difference from atmospheric pressure are created in each four-stroke cycle constituted by four strokes; and the creation of the smaller and larger depressions is performed in each four-stroke cycle, the engine unit (100, 200) further comprising:
a canister (161) connected to a fuel tank (14) and accommodating therein an adsorbent configured to adsorb fuel vapor contained in incoming air from the fuel tank (14);
a communication passage member (163, 263) configured to establish communication between an inside of the canister (161) and the downstream intake passage portion (110d) for each cylinder (131);
a valve (170) switchable from a closed state to an open state and switchable from the open state to the closed state, the closed state being the state where the valve (170) prevents communication of air between the inside of the canister (161) and the downstream intake passage portion (110d), the open state being the state where the valve (170) allows communication of air between the inside of the canister (161) and the downstream intake passage portion (110d);
a controller (150) configured to control the valve (170) to perform a valve switching operation in association with the pressure-variation manner in which the creation of the smaller and larger depressions is performed in each four-stroke cycle, the valve switching operation being a set of switching-on and switching-off operations, one of the operations being performed first and then the other one of the operations being performed, the switching-on operation being an operation to switch the valve (170) from the closed state to the open state, and the switching-off operation being an operation to switch the valve (170) from the open state to the closed state; and
an intake valve (141) configured to open/close a communication opening between the downstream intake passage portion (110d) and the combustion chamber (130a),
**characterized in that**
the controller (150) is configured to
control the valve (170) so as to perform the switching-on operation at a timing within a last half of a closed period during which the intake valve (141) is closed, and before the end of the closed period,
perform the switching-off operation before the switching-on operation, during one four-stroke cycle in which the switching-on operation is performed, and
perform each of the switching-on operation and the switching-off operation once in one four-stroke cycle in which the switching-on operation is performed.

2. The engine unit (100, 200) according to claim 1, wherein, when each of the four strokes is counted as one stroke, the controller (150) is configured to control the valve (170) so as to perform the valve switching operation in association with an n-stroke period, where n is a multiple of 4.

3. The engine unit (100, 200) according to claim 2, wherein the controller (150) is configured to control the valve (170) so as to perform at least one of the switching-on and switching-off operations in synchronization with an n-stroke period, where n is a multiple of 4.

4. The engine unit (100, 200) according to claim 3, wherein the controller (150) is configured to control the valve (170) so as to perform each of the switching-on and switching-off operations once in each n-stroke period, where n is a multiple of 4.

5. The engine unit (100, 200) according to claim 4, wherein the controller (150) is configured to control the valve (170) so as to perform each of the switching-on and switching-off operations once in each four-stroke period.

6. The engine unit (100, 200) according to claim 3, wherein the controller (150) is configured to control the valve (170) so as to perform each of the switching-on and switching-off operations twice or more in each n-stroke period, where n is a multiple of 4.

7. The engine unit (100, 200) according to claim 2, wherein the controller (150) is configured to control the valve (170) so as to perform one of the switching-on and switching-off operations in each n-stroke period, where n is a multiple of 4, a timing to perform the one of the switching-on and switching-off operations in each period being different between the n-stroke periods.

8. The engine unit (100, 200) according to any one of claims 1 to 7, further comprising a sensor (151) configured to detect negative pressure in the downstream intake passage portion (110d), wherein
the controller (150) is configured to control a relative length of a valve open period in a four-stroke cycle with respect to a length of the four-stroke cycle, based on a detection result obtained by the sensor (151), the valve open period being the period during which the valve (170) is in the open state.

9. The engine unit (100, 200) according to any one of claims 1 to 8, wherein the controller (150) is configured to control the valve (170) so that when a combustion chamber-introduction air amount, which is an amount of air introduced from the downstream intake passage portion (110d) into the combustion chamber (130a), is equal to or lower than a predetermined value, a ratio of an amount of fuel vapor introduced from the communication passage member (163, 263) to the downstream intake passage portion (110d) to the combustion chamber-introduction air amount increases with an increase in the combustion chamber-introduction air amount.

10. A straddled vehicle (1) comprising:
the engine unit (100, 200) recited in any one of claims 1 to 9;
a vehicle body frame (4) supporting the engine unit (100, 200);
a rider seat (11);
handlebars (9) provided frontward of the rider seat (11); and
a fuel tank (14) connected to the canister (161) included in the engine unit (100, 200).

## Patentansprüche

1. Eine Einzylinder- oder Mehrzylinder-Viertaktmotoreinheit (100, 200), die folgende Merkmale aufweist:
eine Verbrennungskammer (130a); ein Ansaugkanalbauglied (110), durch das Luft in die Verbrennungskammer (130a) eingeführt wird; und ein Drosselventil (112), das in einem Zwischenabschnitt des Ansaugkanalbauglieds (110) vorgesehen ist, wobei die Verbrennungskammer (130a), das Ansaugkanalbauglied (110) und das Drosselventil (112) für jeden Zylinder (131) vorgesehen sind, wobei Druck in einem nachgeschalteten Ansaugkanalabschnitt (110d) des Ansaugkanalbauglieds (110), der zu dem Drosselventil (112) nachgeschaltet ist, auf druckvariable Weise variiert, sodass in jedem Viertaktzyklus, der durch vier Takte gebildet wird, ein geringerer Unterdruck mit einer geringeren Differenz zum atmosphärischen Druck und ein größerer Unterdruck mit einer größeren Differenz zum atmosphärischen Druck erzeugt werden; und die Erzeugung des geringeren und größeren Unterdrucks in jedem Viertaktzyklus durchgeführt wird, wobei die Motoreinheit (100, 200) ferner folgende Merkmale aufweist:
einen Kanister (161), der mit einem Kraftstofftank (14) verbunden ist und darin ein Adsorptionsmittel aufnimmt, das konfiguriert ist, um Kraftstoffdampf, der in ankommender Luft von dem Kraftstofftank (14) enthalten ist, zu adsorbieren;
ein Kommunikationskanalbauglied (163, 263), das konfiguriert ist, um zwischen einem Inneren des Kanisters (161) und dem nachgeschalteten Ansaugkanalabschnitt (110d) für jeden Zylinder (131) Kommunikation herzustellen;
ein Ventil (170), das von einem geschlossenen Zustand in einen offenen Zustand geschaltet werden kann und von einem offenen Zustand in den geschlossenen Zustand geschaltet werden kann, wobei der geschlossene Zustand der Zustand ist, in dem das Ventil (170) Kommunikation von Luft zwischen dem Inneren des Kanisters (161) und dem nachgeschalteten Ansaugkanalabschnitt (110d) verhindert, wobei der offene Zustand der Zustand ist, in dem das Ventil (170) Kommunikation von Luft zwischen dem Inneren des Kanisters (161) und dem nachgeschalteten Ansaugkanalabschnitt (110d) erlaubt;
eine Steuerung (150), die konfiguriert ist, um das Ventil (170) zu steuern, um eine Ventilschaltoperation durchzuführen in Zusammenhang mit der druckvariablen Weise, in der die Erzeugung des geringeren und größeren Unterdrucks in jedem Viertaktzyklus durchgeführt wird, wobei die Ventilschaltoperation ein Satz von Ein- und Ausschaltoperationen ist, wobei eine der Operationen zuerst durchgeführt wird und dann die andere der Operationen durchgeführt wird, wobei die Einschaltoperation eine Operation ist, um das Ventil (170) von dem geschlossenen Zustand zu dem offenen Zustand zu schalten, und die Ausschaltoperation eine Operation ist, um das Ventil (170) von dem offenen Zustand in den geschlossenen Zustand zu schalten;
ein Ansaugventil (141), das konfiguriert ist, um eine Kommunikationsöffnung zwischen dem nachgeschalteten Ansaugkanalabschnitt (110d) und der Verbrennungskammer (130a) zu öffnen/zu schließen,
**dadurch gekennzeichnet, dass**
die Steuerung (150) konfiguriert ist zum
Steuern des Ventils (170), um die Einschaltoperation zu einem Zeitpunkt innerhalb zumindest einer Hälfte eines geschlossenen Zeitraums, während dessen das Ansaugventil (141) geschlossen ist, und vor dem Ende des geschlossenen Zeitraums durchzuführen,
Durchführen der Ausschaltoperation vor der Einschaltoperation während eines Viertaktzyklus, in dem die Einschaltoperation durchgeführt wird und
Durchführen sowohl der Einschaltoperation als auch der Ausschaltoperation einmal in einem Viertaktzyklus, in dem die Einschaltoperation durchgeführt wird.

2. Die Motoreinheit (100, 200) gemäß Anspruch 1, bei der, wenn jeder der vier Takte als ein Takt gezählt wird, die Steuerung (150) konfiguriert ist, um das Ventil (170) zu steuern, um die Ventilschaltoperation in Verbindung mit einem n-Takt-Zeitraum durchzuführen, wobei n ein Mehrfaches von 4 ist.

3. Die Motoreinheit (100, 200) gemäß Anspruch 2, bei der die Steuerung (150) konfiguriert ist, um das Ventil (170) zu steuern, um zumindest entweder eine Einschalt- oder eine Ausschaltoperation synchron mit einem n-Takt-Zeitraum durchzuführen, wobei n ein Mehrfaches von 4 ist.

4. Die Motoreinheit (100, 200) gemäß Anspruch 3, bei der die Steuerung (150) konfiguriert ist, um das Ventil (170) zu steuern, um sowohl die Einschalt- als auch die Ausschaltoperation einmal in jedem n-Takt-Zeitraum durchzuführen, wobei n ein Mehrfaches von 4 ist.

5. Die Motoreinheit (100, 200) gemäß Anspruch 4, bei der die Steuerung (150) konfiguriert ist, um das Ventil (170) zu steuern, um sowohl die Einschalt- als auch die Ausschaltoperation einmal in jeder Viertaktperiode durchzuführen.

6. Die Motoreinheit (100. 200) gemäß Anspruch 3, bei der die Steuerung (150) konfiguriert ist, um das Ventil (170) zu steuern, um sowohl die Einschalt- als auch die Ausschaltoperation zweimal oder öfter in jedem n-Takt-Zeitraum durchzuführen, wobei n ein Mehrfaches von 4 ist.

7. Die Motoreinheit (100, 200) gemäß Anspruch 2, bei der die Steuerung (150) konfiguriert ist, um das Ventil (170) zu steuern, um entweder die Einschalt- oder die Ausschaltoperation in jedem n-Takt-Zeitraum durchzuführen, wobei n ein Mehrfaches von 4 ist, wobei ein Zeitpunkt zum Durchführen entweder der Einschalt- oder Ausschaltoperation in jedem Zeitraum zwischen den n-Takt-Zeiträumen unterschiedlich ist.

8. Die Motoreinheit (100, 200) gemäß einem der Ansprüche 1 bis 7, die ferner einen Sensor (151) aufweist, der konfiguriert ist, um Negativdruck in dem nachgeschalteten Ansaugkanalabschnitt (110d) zu erfassen, wobei
die Steuerung (150) konfiguriert ist, um eine relative Länge eines Ventil-Offen-Zeitraums in einem Viertaktzyklus in Bezug auf eine Länge des Viertaktzyklus zu steuern, basierend auf einem Erfassungsergebnis, das durch den Sensor (151) erhalten wird, wobei der Ventil-Offen-Zeitraum der Zeitraum ist, während dessen das Ventil (170) in dem offenen Zustand ist.

9. Die Motoreinheit (100, 200) gemäß einem der Ansprüche 1 bis 8, bei der die Steuerung (150) konfiguriert ist, um das Ventil (170) zu steuern, sodass, wenn eine Verbrennungskammereinführungsluftmenge, die eine Luftmenge ist, die von dem nachgeschalteten Ansaugkanalabschnitt (110d) in die Verbrennungskammer (130a) eingeführt wird, gleich wie oder niedriger als ein vorbestimmter Wert ist, sich ein Verhältnis einer Kraftstoffdampfmenge, die von dem Kommunikationskanalbauglied (163, 263) in den nachgeschalteten Ansaugkanalabschnitt (110d) eingeführt wird, zu der Verbrennungskammereinführungsluftmenge mit einem Anstieg bei der Verbrennungskammereinführungsluftmenge erhöht.

10. Ein Grätschsitzfahrzeug (1), das folgende Merkmale aufweist:
die Motoreinheit (100, 200) gemäß einem der Ansprüche 1 bis 9;
einen Fahrzeugkörperrahmen (4), der die Motoreinheit (100, 200) trägt;
einen Fahrersitz (11);
einen Lenker (9), der vor dem Fahrersitz (11) vorgesehen sind;
einen Kraftstofftank (14), der mit dem Kanister (161) verbunden ist, der in der Motoreinheit (100, 200) enthalten ist.

## Revendications

1. Unité de moteur à quatre temps monocylindre ou multicylindre (100, 200) comprenant:
une chambre de combustion (130a); un élément de passage d'admission (110) à travers lequel de l'air est introduit dans la chambre de combustion (130a); et une soupape d'étranglement (112) prévue dans une partie intermédiaire de l'élément de passage d'admission (110), la chambre de combustion (130a), l'élément de passage d'admission (110) et la soupape d'étranglement (112) étant prévus pour chaque cylindre (131), la pression dans une partie de passage d'admission aval (110d) de l'élément de passage d'admission (110) qui se trouve en aval de la soupape d'étranglement (112) variant de manière à faire varier la pression de sorte qu'une dépression inférieure présentant une différence inférieure par rapport à la pression atmosphérique et une dépression supérieure présentant une différence supérieure par rapport à la pression atmosphérique soient créées dans chaque cycle à quatre temps constitué de quatre temps; et la création des dépressions inférieure et supérieure est réalisée dans chaque cycle à quatre temps, l'unité de moteur (100, 200) comprenant par ailleurs:
une boîte (161) connectée à un réservoir de carburant (14) et y recevant un adsorbant configuré pour adsorber la vapeur de carburant contenue dans l'air entrant du réservoir de carburant (14);
un élément de passage de communication (163, 263) configuré pour établir une communication entre l'intérieur de la boîte (161) et la partie de passage d'admission aval (110d) pour chaque cylindre (131);
une soupape (170) commutable d'un état fermé à un état ouvert et commutable de l'état ouvert à l'état fermé, l'état fermé étant l'état dans lequel la soupape (170) empêche la communication d'air entre l'intérieur de la boîte (161) et la partie de passage d'admission aval (110d), l'état ouvert étant l'état dans lequel la soupape (170) permet la communication d'air entre l'intérieur de la boîte (161) et la partie de passage d'admission aval (110d);
un moyen de commande (150) configuré pour commander la soupape (170) pour effectuer une opération de commutation de soupape en association avec la manière de varier de la pression dans laquelle la création des dépressions inférieure et supérieure est réalisée dans chaque cycle à quatre temps, l'opération de commutation de soupape étant un ensemble d'opérations d'activation et de désactivation, une des opérations étant réalisée en premier lieu et ensuite étant réalisée l'autre opération, l'opération d'activation étant une opération permettant de commuter la soupape (170) de l'état fermé à l'état ouvert, et l'opération de désactivation étant une opération permettant de commuter la soupape (170) de l'état ouvert à l'état fermé; et
une soupape d'admission (141) configurée pour ouvrir/fermer une ouverture de communication entre la partie de passage d'admission aval (110d) et la chambre de combustion (130a),
**caractérisée par le fait que**
le moyen de commande (150) est configuré pour
commander la soupape (170) de manière à effectuer l'opération d'activation à un moment se trouvant dans la dernière moitié d'une période de fermeture pendant laquelle la soupape d'admission (141) est fermée et avant la fin de la période de fermeture,
effectuer l'opération de désactivation avant l'opération d'activation, pendant un cycle de quatre temps dans lequel est effectuée l'opération d'activation, et
effectuer chacune des opérations d'activation et de désactivation une fois par cycle de quatre temps dans lequel est effectuée l'opération d'activation.

2. Unité de moteur (100, 200) selon la revendication 1, dans laquelle, lorsque chacun des quatre temps est compté comme un seul temps, le moyen de commande (150) est configuré pour commander la soupape (170) de manière à effectuer l'opération de commutation de soupape en association avec une période de n temps, où n est un multiple de 4.

3. Unité de moteur (100, 200) selon la revendication 2, dans laquelle le moyen de commande (150) est configuré pour commander la soupape (170) de manière à effectuer au moins l'une parmi les opérations d'activation et de désactivation en synchronisation avec une période de n temps, où n est un multiple de 4.

4. Unité de moteur (100, 200) selon la revendication 3, dans laquelle le moyen de commande (150) est configuré pour commander la soupape (170) de manière à effectuer chacune des opérations d'activation et de désactivation une fois par période de n temps, où n est un multiple de 4.

5. Unité de moteur (100, 200) selon la revendication 4, dans laquelle le moyen de commande (150) est configuré pour commander la soupape (170) de manière à effectuer chacune des opérations d'activation et de désactivation une fois par période de quatre temps.

6. Unité de moteur (100, 200) selon la revendication 3, dans laquelle le moyen de commande (150) est configuré pour commander la soupape (170) de manière à effectuer chacune des opérations d'activation et de désactivation deux fois ou plus dans chaque période de n temps, où n est un multiple de 4.

7. Unité de moteur (100, 200) selon la revendication 2, dans laquelle le moyen de commande (150) est configuré pour commander la soupape (170) de manière à effectuer une parmi les opérations d'activation et de désactivation dans chaque période de n temps, où n est un multiple de 4, un moment pour effectuer l'une parmi les opérations d'activation et de désactivation dans chaque période étant différent entre les périodes de n temps.

8. Unité de moteur (100, 200) selon l'une quelconque des revendications 1 à 7, comprenant par ailleurs un capteur (151) configuré pour détecter une pression négative dans la partie de passage d'admission aval (110d), dans laquelle
le moyen de commande (150) est configuré pour commander une longueur relative d'une période d'ouverture de soupape dans un cycle à quatre temps par rapport à une longueur du cycle à quatre temps, sur base d'un résultat de détection obtenu par le capteur (151), la période d'ouverture de soupape étant la période pendant laquelle la soupape (170) est à l'état ouvert.

9. Unité de moteur (100, 200) selon l'une quelconque des revendications 1 à 8, dans laquelle le moyen de commande (150) est configuré pour commander la soupape (170) de sorte que, lorsqu'une quantité d'air d'introduction dans la chambre de combustion, qui est une quantité d'air introduit de la partie de passage d'admission aval (110d) dans la chambre de combustion (130a), est égale ou inférieure à une valeur prédéterminée, un rapport entre une quantité de vapeur de carburant introduite de l'élément de passage de communication (163, 263) dans la partie de passage d'admission aval (110d) et la quantité d'air d'introduction dans la chambre de combustion augmente au fur et à mesure qu'augmente la quantité d'air d'introduction dans la chambre de combustion.

10. Véhicule à selle (1) comprenant:
l'unité de moteur (100, 200) selon l'une quelconque des revendications 1 à 9;
un châssis de carrosserie de véhicule (4) supportant l'unité de moteur (100, 200);
un siège de conducteur (11);
un guidon (9) prévu à l'avant du siège de conducteur (11); et
un réservoir de carburant (14) connecté à la boîte (161) incluse dans l'unité de moteur (100, 200).
